# EUROPEAN PATENT SPECIFICATION

(11) **EP 3 013 878 B1**
(45) Date of publication and mention of the grant of the patent: **26.12.2018**
(21) Application number: 14740098.0
(22) Date of filing: 25.06.2014
(51) Int. Cl.: C08G 18/10, C08G 18/38, C08G 18/44

(54) **CURATIVE AGENT FOR COATINGS ON INDUSTRIAL ROLLERS**
HEILMITTEL FÜR BESCHICHTUNGEN AUF INDUSTRIELLEN WALZEN
AGENT DURCISSEUR POUR REVÊTEMENTS SUR DES ROULEAUX INDUSTRIELS

(30) Priority: 27.06.2013 US 201361839908 P
(43) Date of publication of application: 04.05.2016
(73) Proprietor: Dow Global Technologies LLC, Midland, MI 48674 (US)
(72) Inventor: JAGTAP, Subodh P., Lake Jackson, TX 77566 (US); GRIGORIEW, Marcin, Macclesfield SK 10 3HR (GB); SINGH, Harpreet, Pearland, TX 77584 (US); HEATH, William H., Lake Jackson, TX 77566 (US); SINGH, Amarnath, Pearland, TX 77584 (US)
(74) Representative: Beck Greener
(86) International application number: PCT/US2014/044010
(87) International publication number: WO 2014/210103

(56) References cited:
- WO-A1-98/56841
- WO-A1-03/091306
- WO-A1-2014/086650
- DE-A1-102011 079 894
- US-A1- 2009 018 256

## Description

### Field

Embodiments relate to a method for forming an industrial roller polyurethane coating, which method includes forming a coating layer on an industrial roller by forming a coating layer forming reaction mixture that includes a prepolymer component, a polyol additive and a curative component.

### Introduction

Polyurethane elastomers are used in the construction of industrial rollers, e.g., to form coatings that exhibit advantages in load bearing capability and abrasion resistance over an extended period of use. The polyurethane elastomers may be made by combining a polyol, e.g., a poly(tetra methylene)ether glycol (PTMEG), with an isocyanate, e.g., as discussed in WO1998/056841. A coating including PTMEG may exhibit advantageous dynamic behavior in applications that involve dynamic loads, but the coating may also suffer from poor oxygen, water, and chemical stability at elevated temperatures, which reduces the overall life of the coating. Further, in industrial applications such as in a paper mill, a coating including PTMEG on an industrial roller is exposed to a moisture-rich environment and elevated operating temperatures (e.g., temperatures could potentially reach 110 °C), which causes degradation and/or demolding of the coating and reduces the overall life of the coating. Therefore, coatings that can reduce the possibility of instability at elevated temperatures, degradation, and/or demolding of the polyurethane elastomers in industrial conditions (e.g., such as the condition of high moisture and elevated temperatures found in paper mills) are sought.

Further, the polyurethane coatings for industrial rollers are distinguishable from a polyurethane layer embedded within a papermaking shoe press belt, e.g., as taught in U.S. Patent No. 7,955.475. In particular, it is desirable for polyurethane coatings for industrial rollers to have a short gel time (e.g., less than ten minutes) in order for proper application on an industrial roller. WO-A 03 091306 discloses a polyurethane cover for a roll, US-A 2009/018256 discloses a polyurethane for roller coatings and DE-A-10 2011 079894 discloses a polyurethane for a sleeve for a pressing roller. Therefore, coatings that are both able to withstand industrial conditions and have short gel times are sought.

### Summary

Embodiments may be realized by providing a method for forming a polyurethane coating on an industrial roller that includes applying a coating that is a product of a coating forming reaction mixture, which includes a prepolymer component, a polyol additive and a curative component, to an industrial roller, and curing the coating to form a polyurethane coating layer on the industrial roller as defined in claim 1. The prepolymer component includes a polycarbonate prepolymer, which is a product of a prepolymer forming reaction mixture that includes an isocyanate component and a polycarbonate polyol, and the prepolymer component is present in the coating forming reaction mixture in an amount from 30 wt% to 80 wt%, based on a total weight of the coating forming reaction mixture. The curative component includes a chlorinated aromatic diamine curative agent, and the curative component is present in the coating forming reaction mixture in an amount from 5 wt% to 20 wt%, based on the total weight of the coating forming reaction mixture..

Further embodiments are defined in claims 2 to 6 and claims 7 to 8.

### Detailed Description

Embodiments relate to a method of forming a polyurethane coating that includes allowing a reaction to occur between a urethane based prepolymer component and a curative component. The urethane based prepolymer component includes at least one urethane based prepolymer that is formed from a reaction between an isocyanate component and a polycarbonate diol component. The curative component includes at least a chlorinated aromatic diamine based curative agent, the structure of which compound includes an aromatic compound, two amino moieties, and chlorine (e.g., the amino moieties and the chlorine are substituted onto a benzene ring).

According to embodiments, the polyurethane coating is used on industrial rollers such as a suction press roll, a steel press roller, and a tension roller in production lines. The industrial roller is coated with a product of a coating layer forming reaction mixture that includes the urethane based prepolymer component and the curative component, which reaction mixture includes from 30 wt% to 80 wt% of the prepolymer component and from 5 wt% to 20 wt% of the curative component, based on the total weight of the reaction mixture. As would be understood by a person of ordinary skill in the art, the weight percentages for the reaction mixture are calculated on a basis of 100 wt% for the total weight of the reaction mixture. The urethane based prepolymer may include at least one terminal isocyanate group, and the curative component may include at least one curative agent having an active hydrogen group.

The urethane based prepolymer is a product of a prepolymer forming reaction mixture that includes an isocyanate component and a polyol component. The isocyanate component includes one or more different isocyanates (e.g., at least two different aromatic isocyanates). The urethane prepolymers may have an isocyanate group content (i.e., NCO content) from 5 % to 30 % (e.g., 5 % to 20 %, 10 % to 15%, 9 % to 11%). According to exemplary embodiments, the polyol component includes a polycarbonate diol, e.g., includes one polycarbonate diol, one or more polycarbonate diols, or one polycarbonate diol and one or more other polyols. When reacting the isocyanate component with the polyol component, the isocyanate index may be from 80 to 1000 (e.g., 100 to 600, 200 to 500). The isocyanate index is the equivalents of isocyanate groups (i.e., NCO moieties) present, divided by the total equivalents of isocyanate-reactive hydrogen containing groups (i.e., OH moieties) present, multiplied by 100. Considered in another way, the isocyanate index is the ratio of the isocyanate groups over the isocyanate reactive hydrogen atoms present in a formulation, given as a percentage. Thus, the isocyanate index expresses the percentage of isocyanate actually used in a formulation with respect to the amount of isocyanate theoretically required for reacting with the amount of isocyanate-reactive hydrogen used in a formulation.

The isocyanate component accounts for 20 wt% to 60 wt% (e.g., 25 wt% to 50 wt%, 30 wt% to 45 wt%, 35 wt% to 40 wt%) of a total weight of the prepolymer forming reaction mixture. The polyol component accounts for 30 wt% to 80 wt% (e.g., 45 wt% to 75 wt%, 50 wt% to 70 wt%, 55 wt% to 65 wt%, 60 wt% to 65 wt%).) of the total weight of the prepolymer forming reaction mixture. The prepolymer forming reaction mixture may also include an additive component that includes a catalyst that is formulated to initiate, further, and/or accelerate the reaction between the isocyanate component and the polyol component. For example, the catalyst may include at least one catalyst that is known in the art. The additive component may also include other additives selected from the group of a bromoacetic ester, a trichloroacetic acid, a cyanoacetic ester, a dimethyl sulfate, a benzoyl chloride, and an acetyl chloride. The additive component accounts for less than 5 wt% (e.g., from 0.01 wt% to 0.05 wt%, 0.15 wt% to 0.1 wt %).) of the total weight of the prepolymer forming reaction mixture. As would be understood by a person of ordinary skill in the art, the weight percentages are calculated on a basis of 100 wt% for the total weight of the prepolymer forming reaction mixture.

Each of the one or more isocyanates in the isocyanate component of the prepolymer forming reaction mixture may have a functionality from 1.8 to 4.2 (e.g., from 1.9 to 3.5, from 2.0 to 3.3). The one or more isocyanates may be selected from the group of an aromatic isocyanate, a cycloaliphatic isocyanate, and an aliphatic isocyanate. Exemplary isocyanates include diphenylmethane diisocyanate (MDI), toluene diisocyanate (TDI), m-phenylene diisocyanate, p-phenylene diisocyanate (PPDI), isophorone diisocyanate (IPDI), hexamethylene diisocyanate (HDI), and various isomers and/or derivatives thereof. Using at least one of its 2,4'-, 2,2'- and 4,4'-isomers, MDI may be in the form of a homopolymer, a copolymer, a mixture, or a modified polymer. Exemplary MDI products are available from The Dow Chemical Company under the trade names ISONATE, PAPI, and VORANATE. Using at least one of its 2,4 and 2,6-isomers, TDI may be in the form of a homopolymer, a copolymer, a mixture, or a modified polymer. Exemplary TDI products are available from The Dow Chemical Company under the trade name VORANATE.

According to an exemplary embodiment, the isocyanate component in the prepolymer forming reaction mixture may include an aromatic diisocyanate mixture that includes at least two different aromatic diisocyanates, e.g., a mixture of two different isomers of MDI or TDI, or a mixture of MDI and TDI. According to exemplary embodiments, the aromatic diisocyanate mixture may include at least 60 wt% of 4,4'-methylene diphenyl isocyanate and a remainder of at least one selected from the group of an isomer of TDI and one isomer of MDI that is different from 4,4'-methylene diphenyl isocyanate (e.g., in mixture ratios of 60 wt% and 40 wt%, 70 wt% and 30 wt%, 80 wt% and 20 wt%, 90 wt% and 10 wt%, 95 wt% and 5 wt%, 98 wt% and 2 wt%), based on a total weight of the isocyanate component. For example, the aromatic diisocyanate mixture may include at least 60 wt% of 4,4'-methylene diphenyl isocyanate and a remainder of 2,4'-methylene diphenyl isocyanate, based on the total weight of the isocyanate component.

The polyol component for forming the urethane based prepolymers includes at least one polycarbonate polyol, and may optionally include at least one other polyol (e.g., at least one selected from the group of a polyether polyol, a polyester polyol, an ester-carbonate polyol, and an ether-carbonate polyol). According to an exemplary embodiment, the reaction mixture for forming the prepolymer includes from 30 wt% to 80 wt% (e.g., 40 wt% to 70 wt%, 30 wt% to 60 wt%, 50 wt% to 80 wt%), of a polycarbonate diol component, based on a total weight of the prepolymer forming reaction mixture. The polyols in the polyol component have a functionality from 2 to 8 (e.g., 2 to 4).

The polycarbonate polyol may be a product of a reaction between a diol component (e.g., that includes as at least one alkanediol) and a carbonyl moiety containing component (e.g., that includes as at least one selected from the group of a carbonate ester and phosgene). Exemplary diols include 1,3-propanediol, 1,4-butanediol, 1,5-pentanediol, 1,6-hexandiol, 1,7-heptanediol, 1,2-dodecanediol, cyclohexanedimethanol, 3-methyl-1,5-pentanediol, 2,4-diethyl-1,5-pentanediol, bis(2-hydroxyethyl)ether, bis(6-hydroxyhexyl)ether, short-chain C2, C3 or C4 polyether diols having a number average molecular weight of less than 700 g/mol, combinations thereof, and isomers thereof. Exemplary carbonate esters include dimethyl carbonate, trimethylene carbonate, ethylene carbonate, diphenyl carbonate, propylene carbonate, poly(propylene carbonate), and poly(bisphenol A carbonate). The polycarbonate polyol may be obtained by subjecting a reaction mixture including the diol component and the carbonyl moiety containing component to a polymerization reaction. For example, the resultant polycarbonate polyol may be a hydroxyl terminated polycarbonate diol.

The polycarbonate polyol may include repeating units from one or more alkane diols having from 2 to 50 carbon atoms (e.g., 2 to 20 carbon atoms, 3 to 6 carbon atoms, 5 to 6 carbon atoms, etc.) as a branched or unbranched chain, which may also be interrupted by additional heteroatoms such as oxygen (O). Exemplary polycarbonate polyols having repeating units from one or more alkane diol components are available from UBE Industries under the trade name ETERNACOLL, and from Bayer MaterialScience, LLC, under the trade name DESMOPHEN. For example, the polycarbonate polyol is one selected from the group of a 1,6-hexanediol based polycarbonate diol, a 1,5-pentanediol based polycarbonate diol, a 1-4-butanediol based polycarbonate diol, and a 1,3-propanediol based polycarbonate diol. According to an exemplary embodiment, the polycarbonate polyol is a reaction product of 1,6-hexanediol and a carbonate ester such as 1,4-cyclohexanedimethanol.

The polycarbonate polyol may have an average molecular weight from 750 to 5000 g/mol (e.g., 1000 to 5000 g/mol, 1500 to 3000 g/mol, 1800 to 2200 g/mol). The polycarbonate polyol may have a nominal hydroxyl number from 22 to 220 mg KOH/g (e.g., 35 to 150 mg KOH/g, 45 to 75 mg KOH/g, 50 to 60 mg KOH/g). The polycarbonate polyol may have an average viscosity from 300 to 15,000 cp as measured at 75 °C by parallel plate rheometry. For example, the polycarbonate polyol may be moderately viscous with a viscosity from 1 1.5 to 5 Pa.s (1500 cp to 5000 cp) measured at 75 °C (e.g., 2 to 3 Pa.s (2000 cp to 3000 cp)).

The polymerization reaction for the polycarbonate polyol may be aided by the presence of a catalyst component. A method for performing the polymerization reaction to form the polycarbonate diol in the presence of the catalyst component includes, e.g., a transesterification reaction. In a transesterification reaction, reactants are contacted in the presence of a transesterification catalyst and under reaction conditions. A catalyst component that includes at least one selected from the group of a homogeneous catalyst and a heterogeneous catalyst may be used. The catalyst used in the polymerization reaction for the polycarbonate polyol may include at least one selected from the group of a hydroxide, an oxide, a metal alcoholate, a carbonate, and an organometallic compound of metal of one of a main group I, II, III and IV of the periodic table of the elements, a subgroup III and IV, and an element from the rare earth group (e.g., compounds of Ti, Zr, Pb, Sn and Sb, are particularly suitable for the processes described herein). After the reaction is complete, the catalyst may be left in the resultant product, or may be separated, neutralized, or masked.

Temperatures for the transesterification reaction may be between 120°C and 240°C. The transesterification reaction may be performed at atmospheric pressure; however, it is also possible to form the transesterification reaction at lower or higher pressures. Vacuum may be applied at the end of the activation cycle to remove any volatiles. Reaction time depends on variables such as temperature, pressure, and the type and amount of catalyst used.

The prepolymer component for forming the coating layer may optionally include at least one other prepolymer that is different from the polycarbonate prepolymer. According to an exemplary embodiment, the prepolymer component includes 50 wt% to 99 wt% (e.g., 60 wt% to 90 wt%, 75 wt% to 85 wt%) of the polycarbonate prepolymer, based on a total weight of the prepolymer component, and a remainder of the at least one other prepolymer such as a polyether glycol derived prepolymer (e.g., a PTMEG derived prepolymer). A total weight of the other prepolymer in the polyol component may be from 1 wt% to 50 wt % (e.g., 5 wt% to 35 wt%, 10 wt% to 30 wt%, 15 wt% to 25 wt%) , based on the total weight of the prepolymer component. For example, the prepolymer component may be from an 80:20 to a 70:30 mixture of the polycarbonate prepolymer to the polyether glycol derived prepolymer. As would be understood by a person of ordinary skill in the art, the above weight percentages for the prepolymer component are calculated on a basis of 100 wt% for the total weight of the prepolymer component.

The reaction mixture for forming the polyurethane coating also includes the curative component in addition to the urethane based prepolymer component. The curative component includes at least one chlorinated aromatic diamine curing agent. The chlorinated aromatic diamine accounts for 20 wt% to 100 wt% (e.g., 30 wt% to 90 wt%, 50 wt% to 95 wt%, 80 wt% to 99 wt%, 90 wt% to 100 wt%, etc.) of a total weight of the curative agent component. The chlorinated aromatic diamine curative agents may be, e.g., at least one selected from the group of 4-chloro-3,5-diaminobenzoic-acid isobutyl, 4-chloro-1,2-diaminobenzoic-acid isobutyl, 4-chloro-1,3-diaminobenzoic-acid isobutyl, 4-chloro-1,4-diaminobenzoic-acid isobutyl, di, tri, or tetra chlorinated 1,3- or 1,4-benzene diamine. For example, the chlorinated aromatic diamine agent is 4-chloro-3,5 -diaminobenzoic- acid isobutyl.

The curative agent component may optionally include, in addition to the at least one chlorinated aromatic diamine, at least one other curative agent. The at least one other curative agent may be a bi-functional or a tri-functional organic polyamine compound. For example, the curative component including at least 50 wt% of the chlorinated aromatic diamine curative agent and at least 20 wt% of one or more other curative agents (e.g., of two different aromatic diamine curative agents), based on a total of 100 wt% of the curative component.

The coating layer forming reaction mixture may include at least one polyol additive selected from the group of a polycarbonate polyol and a polyether glycol (such as PTMEG). For example, the polyol additive may be similar to the polyol described above with respect to forming the polycarbonate prepolymer and the polyether glycol derived prepolymer. For example, the coating layer forming reaction mixture may include the same polycarbonate polyol as used to form the polycarbonate prepolymer. The coating layer forming reaction mixture includes from 5 wt% to 60 wt% (e.g., 10 wt% to 55 wt%, 20 wt% to 60 wt%, 40 wt% to 50 wt%, 45 wt% to 55 wt%) the polyol additive, based on the total weight of the reaction mixture.

The urethane prepolymer component and the curative component, and optionally the polyol additive, may be reacted in the presence of other components such as at least one selected from the group of a chain extender, a crosslinker, a filler, and a pigment.

The urethane prepolymer component, the curative component, and any other optional components such as the polyol additive, may be allowed to react with each other to form the polyurethane coating layer. The polyurethane coating layer may be formulated to have a Shore A hardness of at least 90, according to ASTM D 2240. The coating layer may also have a combined hysteresis loss value of less than 65% (e.g., less than 62%) and a permanent set value of less than 18% (e.g., less than 15%, and less than 14%).

The polyurethane coating layer may be formed on an industrial roller by, e.g., a casting process (such as a mold casting process, a rotation casting process, or a centrifugal casting process), a submerging coating process, a spray coating process, an extrusion process, a lamination process, or a lining process. The polyurethane coating layer may be formed directly on an epoxy layer, and the epoxy layer may be partially cured (e.g., less than 50 % cured), prior to the coating layer being formed on the epoxy layer. Thereafter, a curing technique to cure both the epoxy layer and the coating layer on the industrial roller may be performed. The polyurethane coating layer forms a cover on the industrial roller (e.g., having a thickness from 2.5 mm to 4 mm). The polyurethane coating layer may have holes that correspond to a pattern on an outer shell of the industrial roller, e.g., so that the coating layer has an open area from 10 to 20 % based on a total area of the coating layer. The holes are formed after the polyurethane coating layer is applied to the industrial roller.

According to an exemplary embodiment, the polyurethane coating layer may be formed by first preparing the prepolymer component by reacting the isocyanate component (which includes at least one isocyanate) with at least one polycarbonate polyol. Then, the prepolymer component is mixed with the curative component, which includes a chlorinated aromatic diamine curative agent, to form a curable coating layer composition. This curable coating layer composition includes from 30 wt% to 80 wt% of the prepolymer component and from 5 wt% to 20 wt% of the curative component, based on a total weight of the curable coating layer composition. Thereafter, the curable coating layer composition is applied to at least a portion of an outermost surface of the industrial roller (e.g., by using the casting process), and the curing of the applied curable coating layer composition is performed to form the polyurethane coating layer on the industrial roller.

The polyurethane coating layer formed on an industrial roller is distinguishable from a polyurethane coating layer on a machine belt. For example, the polyurethane coating layer may be adhered using the epoxy layer to the outermost surface of the industrial roller, e.g., an outermost metallic surface of the industrial roller. In contrast, a coating layer on a fabric base of a machine belt requires the polyurethane to impregnate the fabric base to a certain depth, such that the fabric base and the polyurethane layer are integrally formed with each other.

The industrial roller having the polyurethane coating layer may be, e.g., one of a suction press roll, a steel press roller, a tension roller, a knit roller, a turning roller, a pinch roller, a steering roller, an idler roller, a coating roller, and an acid pickling roller. According to an exemplary embodiment, the industrial roller is a suction press roll that has a pattern of holes formed on an outer shell thereof and that has a vacuum application at part of a circumference thereof. The suction process roll is adapted to enable water to be squeezed out of an object that is being pressed. According to another exemplary embodiment, the industrial roller is a tension roller that is used to control tension of a belt in production lines, and may be exposed to a high friction, high flexibility, and high pressure environment.

### Examples

The following materials are used
- ADDOLINK® 1604: A curing agent consisting essentially of 4-chloro-3,5-diamino benzoic-acid isobutyl (available from Rhein Chemie).
- ETHACURE® 300: A curing agent consisting of a mixture of mostly 3, 5-dimethylthio-2,6-toluenediamine and 3,5-dimethylthio-2, 4-toluenediamine (available from Albemarle Corporation).
- ETERNACOLL® UH-200: A 1,6-hexanediol based polycarbonate diol with a number average molecular weight of approximately 2,000 g/mol (available from UBE Industries).
- TERATHANE® 1000: A polytetramethylene ether glycol (PTMEG) having a structure of HO(CH₂CH₂CH₂CH₂-O-)ₙH, where n averages 14, and having a number average molecular weight of approximately 1,000 g/mol (available from Invista).
- TERATHANE® 2000: A polytetramethylene ether glycol (PTMEG) having a structure of HO(CH₂CH₂CH₂CH₂-O-)ₙH, where n averages 27, and having a number average molecular weight of approximately 2,000 g/mol (available from Invista).
- Benzoyl chloride: A 99% solution of benzoyl chloride (available from Sigma Aldrich).
- ISONATE™ M 125: An isocyanate of approximately 98/2 weight percent of 4,4'-/2,4'-MDI (available from The Dow Chemical Company).

Firstly, the preparation of prepolymers is performed. The prepolymers for use in Example 1 and Comparative Examples 1 and 2 are prepared using the formulation in Table 1, below. In particular, Example 1 and Comparative Example 1 include the polycarbonate derived prepolymer described in Table 1, and Comparative Example 2 includes the PTMEG derived prepolymer described in Table 2.

**Table 1**

| | **Polycarbonate Prepolymer** (wt%) | **PTMEG Prepolymer** (wt%) |
|---|---|---|
| ETERNACOLL® UH-200 (HDOPC) | 61.18 | -- |
| TERATHANE® 2000 (PTMEG) | -- | 62 |
| Benzoyl Chloride | 0.02 | -- |
| ISONATE™ M125 | 38.8 | 38 |

The polycarbonate prepolymer and the PTMEG prepolymer are formed by allowing the components in Table 1 to react for 2 hours at 80 °C. The NCO content of the polycarbonate prepolymer is 10.34% (as measured according to ASTM D5155).

Secondly, compositions for forming the polyurethane coating layers are formed. The polycarbonate and the PTMEG prepolymers from Table 1 are preheated in the oven at 70 °C. After 1 hour, the polycarbonate prepolymer is mixed for 40 seconds (10 sec @ 800 rpm and 30 sec @ 2350 rpm). The curative components from Table 2 are preheated in the oven at 70 °C for 30 minutes, and molds are preheated to 80 °C. Then, the polycarbonate prepolymers and the PTMEG prepolymers from Table 1 are mixed with the respective components of Table 2 to form reaction mixtures. The resultant mixtures are mixed for 20 seconds (5 sec @ 800 rpm and 15 sec @ 2350 rpm), and then poured into respective molds quickly and compression molded for 15 min at 80 °C under 10000 psi (68.95 MPa). After 15 minutes, the plaques are demolded and post cured in the oven for 16-17 hours at 80 °C.

**Table 2**

| | **Example 1** (wt %) | **Comparative Example 1** (wt %) | **Comparative Example 2** (wt%) |
|---|---|---|---|
| ADDOLINK® 1604 | 7.1 | -- | -- |
| ETHACURE® 300 | -- | 7.9 | 11.2 |
| ETERNACOLL® UH-200 | 46.7 | 41.6 | -- |
| TERATHANE® 1000 | -- | -- | 25.0 |
| Polycarbonate Prepolymer | 46.2 | 50.5 | -- |
| PTMEG Prepolymer | -- | -- | 63.8 |

First, the plaques of Example 1, and Comparative Examples 1 and 2, are evaluated for the following properties:

**Table 3**

| | **Example 1** | **Comparative Example 1** | **Comparative Example 2** |
|---|---|---|---|
| Shore A hardness | 93 | 93 | 95 |
| Tensile strength (MPa) | 41 | 43.5 | 24.2 |
| Elongation at Break Percentage | 536 | 443 | 600 |
| Percentage Modulus | 6.5 | 7 | 6.2 |
| Hysteresis Loss | 61 | 57 | 61 |
| Permanent Set | 13 | 18 | 22 |

Shore hardness A of Example 1 and Comparative Examples 1 and 2 are measured according to ASTM 2240. The tensile strength, elongation, and modulus of Example 1 and Comparative Examples 1 and 2 are obtained on microtensile bar samples that are punched out from the plaques. The bar is dog bone shaped with a width of 0.815 inches (20.7 mm) and length of 0.827 inches (21 mm), and the properties are measured using a Monsanto Tensometer from Alpha technologies. The dog bones are clamped pneumatically and pulled at a strain rate of 5 inch/min (12.7 cm/min).

The hysteresis and permanent set tests are performed using the following procedure: a dog bone is stretched to 100% strain at a rate of 5 inch/min (12.7 cm/min) and then returned back to its original dimension, which represents one stress strain cycle. The resultant data is used to prepare a stress strain curve in which an area between the curve, i.e., between a stretch cycle portion of the curve and a return cycle portion of the curve, is indicative of the energy dissipated. The point of zero stress on the return cycle portion of the curve represents the permanent set (PS) and it is indicative of the dimensional change the part would undergo when exposed to dynamic loads. Hysteresis loss is defined as the following: Hysteresis loss = (AL-AU)*100/AL, where AL is the area under the stress strain curve in a loading cycle (i.e., the stretch cycle portion of the curve) and AU is the area under the curve in the unloading cycle (i.e., the return cycle portion of the curve).

Secondly, the plaques of Example 1 and Comparative Examples 1 and 2 are evaluated for retention in tensile strength (measured as a percentage) after thermal aging at 160 °C over a period of 14 days. Example 1 demonstrates an approximate 98 % retention of tensile strength over 14 days of thermal aging, combined with an initial increase in tensile strength during the first 7 days. Comparative Example 1 demonstrates an approximate 28 % retention over 14 days of thermal aging. Comparative Example 2 demonstrates less than 10 % retention of tensile strength over 14 days of thermal aging, with more than 80 % of the loss occurring within the first 7 days.

Thirdly, the formulations of Example 1 and Comparative Example 1 are evaluated with respect to gel time, in which a gel time range is measured as the time between the onset of gel formation within a reaction mixture after the addition of the curative agent to the prepolymer and the onset of stringing (e.g., the start of elastomers formation). The gel time range is measured according to ASTM D7487. The pot life (i.e., the time interval following the addition of the curative component before the reactive material becomes too viscous to apply satisfactorily) for each of Example 1 and Comparative Example 1 are determined based on the addition of a measured mixing time and the measured gel time.

In particular, Example 1 is measured as having a gel time range from 4-5 minutes with a pot life from 4.4 to 5.4 minutes (based on a mixing time of 40 seconds). Comparative Example 1 is measured as having a gel time range from 5-10 second with a pot life from 25-30 seconds (based on a mixing time of 20 seconds).

## Claims

1. A method for forming a polyurethane coating on an industrial roller, the method comprising:
applying a coating that is a product of a coating forming reaction mixture, which includes a prepolymer component, a polyol additive and a curative component, to an industrial roller, wherein:
the prepolymer component includes a polycarbonate prepolymer, which is a product of a prepolymer forming reaction mixture that includes an isocyanate component and a polycarbonate polyol, and the prepolymer component is present in the coating forming reaction mixture in an amount from 30 wt% to 80 wt%, based on a total weight of the coating forming reaction mixture,
the polyol additive is present in the coating forming reaction mixture in an amount from 5 wt% to 60 wt%, based on the total weight of the coating forming reaction mixture, and
the curative component includes a chlorinated aromatic diamine curative agent, wherein a structure of the chlorinated aromatic diamine curative agent includes an aromatic ring substituted with a chlorine atom and two amino moieties, and the curative component is present in the coating forming reaction mixture in an amount from 5 wt% to 20 wt%, based on the total weight of the coating forming reaction mixture; and
curing the coating to form a polyurethane coating layer on the industrial roller.

2. The method as claimed in claim 1, wherein the chlorinated aromatic diamine curative agent is 4-chloro-3,5-diamino benzoic-acid isobutyl.

3. The method as claimed in any one of claims 1-2, wherein the curative component includes one or more other curative agents in addition to the chlorinated aromatic diamine curative agent, the curative component including at least 50 wt% of the chlorinated aromatic diamine curative agent and at least 20 wt% of the one or more other curative agents, based on a total weight of the curative component.

4. The method as claimed in any one of claims 1-3, wherein the prepolymer forming reaction mixture includes 20 wt% to 60 wt% of the isocyanate component and 30 wt% to 80 wt% of the polycarbonate polyol, based on a total weight of the prepolymer forming reaction mixture.

5. The method as claimed in any one of claims 1-4, wherein the prepolymer component further includes a polyether glycol derived prepolymer, the prepolymer component including at least 1 wt% of the polyether glycol derived prepolymer and at least 50 wt% of the polycarbonate prepolymer, based on a total weight of the prepolymer component.

6. The method as claimed in any one of claims 1-5, wherein the isocyanate component includes at least 60 wt% of 4,4'-methylene diphenyl isocyanate and a remainder of 2,4'-methylene diphenyl isocyanate, based on a total of 100 wt% for the isocyanate component.

7. A polyurethane coating on an industrial roller, comprising a polyurethane coating layer formed by the method claimed in any one of claims 1-6, the polyurethane coating layer having a hysteresis loss value of less than 65% and a permanent set value of less than 18%.

8. A polyurethane coating on a suction press roll, comprising a polyurethane coating layer formed by the method claimed in any one of claims 1-6, the polyurethane coating layer being on an epoxy layer that covers a surface of the suction press roll.

## Patentansprüche

1. Ein Verfahren zum Bilden einer Polyurethanbeschichtung auf einer Industriewalze, wobei das Verfahren Folgendes beinhaltet:
Aufbringen einer Beschichtung, die ein Produkt einer beschichtungsbildenden Reaktionsmischung ist, die eine Präpolymerkomponente, einen Polyolzusatzstoff und eine Härtungskomponente umfasst, auf einer Industriewalze, wobei:
die Präpolymerkomponente ein Polycarbonatpräpolymer umfasst, das ein Produkt einer präpolymerbildenden Reaktionsmischung ist, die eine Isocyanatkomponente und ein Polycarbonatpolyol umfasst, und wobei die Präpolymerkomponente in der beschichtungsbildenden Reaktionsmischung in einer Menge von 30 Gew.-% bis 80 Gew.-%, bezogen auf ein Gesamtgewicht der beschichtungsbildenden Reaktionsmischung, vorhanden ist,
der Polyolzusatzstoff in der beschichtungsbildenden Reaktionsmischung in einer Menge von 5 Gew.-% bis 60 Gew.-%, bezogen auf das Gesamtgewicht der beschichtungsbildenden Reaktionsmischung, vorhanden ist und
die Härtungskomponente ein chloriertes aromatisches Diaminhärtungsmittel umfasst, wobei eine Struktur des chlorierten aromatischen Diaminhärtungsmittels einen aromatischen Ring, der mit einem Chloratom und zwei Aminoanteilen substituiert ist, umfasst, und die Härtungskomponente in der beschichtungsbildenden Reaktionsmischung in einer Menge von 5 Gew.-% bis 20 Gew.-%, bezogen auf das Gesamtgewicht der beschichtungsbildenden Reaktionsmischung, vorhanden ist; und
Härten der Beschichtung, um eine Polyurethanbeschichtungsschicht auf der Industriewalze zu bilden.

2. Verfahren gemäß Anspruch 1, wobei das chlorierte aromatische Diaminhärtungsmittel 4-Chlor-3,5-diaminobenzoesäureisobutyl ist.

3. Verfahren gemäß einem der Ansprüche 1-2, wobei die Härtungskomponente zusätzlich zu dem chlorierten aromatischen Diaminhärtungsmittel ein oder mehrere andere Härtungsmittel umfasst, wobei die Härtungskomponente zu mindestens 50 Gew.-% das chlorierte aromatische Diaminhärtungsmittel und zu mindestens 20 Gew.-% das eine oder die mehreren anderen Härtungsmittel, bezogen auf ein Gesamtgewicht der Härtungskomponente, umfasst.

4. Verfahren gemäß einem der Ansprüche 1-3, wobei die präpolymerbildende Reaktionsmischung zu 20 Gew.-% bis 60 Gew.-% die Isocyanatkomponente und zu 30 Gew.-% bis 80 Gew.-% das Polycarbonatpolyol, bezogen auf ein Gesamtgewicht der präpolymerbildenden Reaktionsmischung, umfasst.

5. Verfahren gemäß einem der Ansprüche 1-4, wobei die Präpolymerkomponente ferner ein polyetherglycolabgeleitetes Präpolymer umfasst, wobei die Präpolymerkomponente zu mindestens 1 Gew.-% das polyetherglycolabgeleitete Präpolymer und zu mindestens 50 Gew.-% das Polycarbonatpräpolymer, bezogen auf ein Gesamtgewicht der Präpolymerkomponente, umfasst.

6. Verfahren gemäß einem der Ansprüche 1-5, wobei die Isocyanatkomponente zu mindestens 60 Gew.-% 4,4'-Methylendiphenylisocyanat und als Rest 2,4'-Methylendiphenylisocyanat, bezogen auf insgesamt 100 Gew.-% für die Isocyanatkomponente, umfasst.

7. Eine Polyurethanbeschichtung auf einer Industriewalze, beinhaltend eine Polyurethanbeschichtungsschicht, die nach dem Verfahren gemäß einem der Ansprüche 1-6 gebildet wird, wobei die Polyurethanbeschichtungsschicht einen Hystereseverlustwert von weniger als 65 % und einen Wert bleibender Dehnung von weniger als 18 % aufweist.

8. Eine Polyurethanbeschichtung auf einer Saugpressrolle, beinhaltend eine Polyurethanbeschichtungsschicht, die nach dem Verfahren gemäß einem der Ansprüche 1-6 gebildet wird, wobei sich die Polyurethanbeschichtungsschicht auf einer Epoxidschicht befindet, welche eine Oberfläche der Saugpressrolle bedeckt.

## Revendications

1. Un procédé pour former un revêtement polyuréthane sur un rouleau industriel, le procédé comprenant :
l'application d'un revêtement qui est un produit d'un mélange réactionnel de formation de revêtement, lequel inclut un constituant prépolymère, un additif polyol et un constituant durcisseur, sur un rouleau industriel, dans lequel :
le constituant prépolymère inclut un prépolymère polycarbonate, qui est un produit d'un mélange réactionnel de formation de prépolymère qui inclut un constituant isocyanate et un polyol de polycarbonate, et le constituant prépolymère est présent dans le mélange réactionnel de formation de revêtement en une quantité allant de 30 % en poids à 80 % en poids, rapporté à un poids total du mélange réactionnel de formation de revêtement,
l'additif polyol est présent dans le mélange réactionnel de formation de revêtement en une quantité allant de 5 % en poids à 60 % en poids, rapporté au poids total du mélange réactionnel de formation de revêtement, et
le constituant durcisseur inclut un agent durcisseur diamine aromatique chloré, dans lequel une structure de l'agent durcisseur diamine aromatique chloré inclut un noyau aromatique substitué par un atome de chlore et deux groupements amino, et le constituant durcisseur est présent dans le mélange réactionnel de formation de revêtement en une quantité allant de 5 % en poids à 20 % en poids, rapporté au poids total du mélange réactionnel de formation de revêtement ; et
le durcissement du revêtement afin de former une couche de revêtement polyuréthane sur le rouleau industriel.

2. Le procédé tel que revendiqué dans la revendication 1, dans lequel l'agent durcisseur diamine aromatique chloré est l'isobutyle de 4-chloro-3,5-diamino acide benzoïque.

3. Le procédé tel que revendiqué dans n'importe laquelle des revendications 1 à 2, dans lequel le constituant durcisseur inclut un ou plusieurs autres agents durcisseurs en plus de l'agent durcisseur diamine aromatique chloré, le constituant durcisseur incluant au moins 50 % en poids de l'agent durcisseur diamine aromatique chloré et au moins 20 % en poids de ces un ou plusieurs autres agents durcisseurs, rapporté à un poids total du constituant durcisseur.

4. Le procédé tel que revendiqué dans n'importe laquelle des revendications 1 à 3, dans lequel le mélange réactionnel de formation de prépolymère inclut de 20 % en poids à 60 % en poids du constituant isocyanate et de 30 % en poids à 80 % en poids du polyol de polycarbonate, rapporté à un poids total du mélange réactionnel de formation de prépolymère.

5. Le procédé tel que revendiqué dans n'importe laquelle des revendications 1 à 4, dans lequel le constituant prépolymère inclut en outre un prépolymère dérivé de polyéther glycol, le constituant prépolymère incluant au moins 1 % en poids du prépolymère dérivé de polyéther glycol et au moins 50 % en poids du prépolymère polycarbonate, rapporté à un poids total du constituant prépolymère.

6. Le procédé tel que revendiqué dans n'importe laquelle des revendications 1 à 5, dans lequel le constituant isocyanate inclut au moins 60 % en poids d'isocyanate de 4,4'-méthylène diphényle et un résidu d'isocyanate de 2,4'-méthylène diphényle, rapporté à un total de 100 % en poids pour le constituant isocyanate.

7. Un revêtement polyuréthane sur un rouleau industriel, comprenant une couche de revêtement polyuréthane formée par le procédé revendiqué dans n'importe laquelle des revendications 1 à 6, la couche de revêtement polyuréthane ayant une valeur de perte par hystérésis inférieure à 65 % et une valeur de déformation rémanente inférieure à 18 %.

8. Un revêtement polyuréthane sur un rouleau presseur à aspiration, comprenant une couche de revêtement polyuréthane formée par le procédé revendiqué dans n'importe laquelle des revendications 1 à 6, la couche de revêtement polyuréthane étant sur une couche d'époxy qui recouvre une surface du rouleau presseur à aspiration.
